# EUROPÄISCHE PATENTSCHRIFT

(11) **EP 2 560 783 B1**
(45) Veröffentlichungstag und Bekanntmachung des Hinweises auf die Patenterteilung: **31.05.2017**
(21) Anmeldenummer: 11715904.6
(22) Anmeldetag: 13.04.2011
(51) Int. Cl.: B23K 26/14, B23K 26/073

(54) **STRAHLFORMUNGSEINHEIT ZUR FOKUSSIERUNG EINES LASERSTRAHLS UND VERFAHREN ZU IHRER ANSTEUERUNG**
BEAM SHAPING UNIT FOR FOCUSING A LASER BEAM AND METHOD OF OPERATING THE SAME
UNITÉ DE MODIFICATION ET DE FOCALISATION D'UN FAISCEAU LASER ET MÉTHODE DE CONTRÔLE DE L'UNITÉ

(30) Priorität: 22.04.2010 DE 202010006047 U
(43) Veröffentlichungstag der Anmeldung: 27.02.2013
(73) Patentinhaber: Trumpf Werkzeugmaschinen GmbH + Co. KG, 71254 Ditzingen (DE)
(72) Erfinder: RUPP, Thomas, 71636 Ludwigsburg (DE); BRAUN, Jens, 70184 Stuttgart (DE); VEES, Dominik, 72072 Tübingen (DE); WEICK, Jürgen-Michael, 71679 Asperg (DE); BURGER, Dieter, 71665 Vaihingen (Enz) (DE)
(74) Vertreter: Kohler Schmid Möbus Patentanwälte
(86) Internationale Anmeldenummer: PCT/EP2011/055853
(87) Internationale Veröffentlichungsnummer: WO 2011/131541

(56) Entgegenhaltungen:
- EP-A1- 1 643 284
- WO-A1-01/38036
- WO-A1-01/39920
- CN-A- 1 286 654
- DE-C1- 19 701 516
- JP-A- 1 005 694
- JP-A- 60 108 190

## Beschreibung

Die Erfindung betrifft eine Strahlformungseinheit zur Fokussierung eines Laserstrahls zur Lasermaterialbearbeitung auf ein Werkstück sowie ein Verfahren zur Ansteuerung dieser Strahlformungseinheit.

In der Lasermaterialbearbeitung muss der Laserstrahl für unterschiedliche Prozesse und Applikationen immer wieder angepasst werden. Neben der Einstellung der jeweils erforderlichen Leistungsniveaus spielen insbesondere auch der Fokusdurchmesser sowie die Fokuslage des Laserstrahls eine erhebliche Rolle. In vielen Fällen, beispielsweise bei einem Wechsel von dünnen zu dicken Blechen oder von dicken zu dünnen Blechen beim Laserschneiden, erfordert diese Anpassung einen Austausch der Bearbeitungsoptik, ggf. sogar des gesamten Bearbeitungskopfes. Die damit verbundenen Rüstzeiten reduzieren die Produktivität der eingesetzten Laserbearbeitungsanlagen.

Zur Einstellung verschiedener Fokusdurchmesser an einem Arbeitspunkt mit minimalem Strahldurchmesser des Laserstrahls ist aus der JP 2009226473 eine Vorrichtung und ein Verfahren bekannt geworden, bei dem ein divergenter Laserstrahl zunächst auf eine verschiebbare Koliimationslinse trifft. Der Fokusdurchmesser, der durch eine in Strahlausbreitungsrichtung nachgelagerte Fokussieroptik auf ein Werkstück abgebildet wird, ist in Abhängigkeit von der Position der Kollimationslinse in Strahlausbreitungsrichtung, d.h. entlang der Laserstrahlachse, einstellbar. Durch diese Durchmesseränderung wird jedoch auch die Fokuslage beeinflusst, so dass diese zur Erhaltung eines konstanten Arbeitspunkts nachgestellt werden muss. Dies kann beispielsweise durch einen zwischen Kollimationslinse und Fokussieroptik angeordneten adaptiven Spiegel erfolgen, der über seinen variablen Krümmungsradius eine Nachstellung der Fokuslage ermöglicht. Der über den adaptiven Spiegel realisierbare Nachstellbereich ist allerdings vergleichsweise gering. Bei guter Abbildungsqualität liegt der Nachstellbereich z.B. in Verbindung mit einer Fokussierlinse mit einer Brennweite von 200 mm bei weniger als 10 mm. Ein weiterer Nachteil des adaptiven Spiegels ist die daraus resultierende aufwendigere Bauform, da in diesem Fall eine lineare Bauweise nicht möglich ist.

Alternativ zur Verwendung eines adaptiven Spiegels kann in der JP 2009226473 auch die Fokussieroptik vergleichbar zur Kollimationslinse in Strahlausbreitungsrichtung bewegbar angeordnet sein, um die Fokuslage entsprechend der Fokusdurchmesseränderung anzupassen. Eine Bewegung der Fokussieroptik erfordert jedoch einerseits präzise Führungselemente sowie anderseits Dichtungselemente, um den Optikraum bei der Bewegung der Fokussieroptik hermetisch abdichten zu können. Diese Anforderungen resultieren in einem komplexen Aufbau des Strahlführungssystems. Zudem erschwert der auf der dem Optikraum abgewandten Seite der Fokussieroptik herrschende Gasdruck eine entsprechende Bewegung.

### Aufgabe der Erfindung

Es ist die Aufgabe der vorliegenden Erfindung, eine Strahlformungseinheit, die in bautechnisch einfacher Weise eine flexible Einstellung von Fokusdurchmesser und Fokuslage und insbesondere eine Erweiterung des Nachstellbereichs der Fokuslage ermöglicht, sowie ein Verfahren zur Ansteuerung dieser Strahlformungseinheit bereitzustellen.

### Gegenstand der Erfindung

Diese Aufgabe wird erfindungsgemäß durch eine Strahlformungseinheit zur Fokussierung eines Laserstrahls zur Lasermaterialbearbeitung auf ein Werkstück gelöst, die ein erstes optisches Element, auf das ein Laserstrahl trifft, ein zweites optisches Element, das dem ersten optischen Element in Strahlausbreitungsrichtung nachgeordnet ist, und eine dem zweiten optischen Element in Strahlausbreitungsrichtung nachgeordnete Fokussieroptik umfasst, wobei dem ersten optischen Element eine erste Fokuseinstelleinrichtung zur Einstellung eines Fokusdurchmessers durch Beeinflussung des ersten optischen Elements zugeordnet ist, wobei dem zweiten optischen Element eine zweite Fokuseinstelleinrichtung zur Einstellung einer Fokuslage in Strahlausbreitungsrichtung des Laserstrahls durch Beeinflussung des zweiten optischen Elements zugeordnet ist, und wobei der Laserstrahl durch das erste optische Element über einen Zwischenfokus auf dem zweiten optischen Element abgebildet wird.

Durch das erfindungsgemäße Vorsehen eines Zwischenfokus zwischen dem ersten und zweiten optischen Element kann der Fokusdurchmesser über einen größeren Bereich variiert werden. In einer vorteilhaften Ausführungsform wird hierzu das erste optische Element als transmissives optisches Element, insbesondere als Linse, ausgebildet, die bevorzugt eine Brennweite von weniger als 50 mm, besonders bevorzugt eine Brennweite von weniger als 40 mm, insbesondere eine Brennweite im Bereich um ca. 30 mm aufweist.

Die Änderung der Abbildungseigenschaften des ersten optischen Elements erfolgt vorteilhafter Weise, indem das erste optische Element entlang der optischen Achse des Laserstrahls über die ihr zugeordnete erste Fokuseinstelleinrichtung zur Einstellung des Fokusdurchmessers bewegbar ist. Die Fokuseinstelleinrichtung sieht hierzu einen Motor oder vergleichbare Antriebsmittel vor.

Das zweite optische Element wird ebenfalls bevorzugt als transmissives optisches Element, insbesondere als Linse, ausgebildet. Durch die Verwendung transmissiver Elemente in der Strahlformungseinheit, d.h. vom ersten optischen Element bis zur abschließenden Fokussieroptik, ergibt sich ein linearer Aufbau, der es ermöglicht, die Komplexität und den Bauraum der Strahlformungseinheit zu reduzieren.

In einer besonders bevorzugten Ausführungsform der Erfindung wird die Fokuslage über das zweite optische Element vergleichbar zum ersten optischen Element verändert, indem das zweite optische Element ebenfalls entlang der optischen Achse des Laserstrahls über die ihr zugeordnete zweite Fokuseinstelleinrichtung bewegbar ist. Die Bewegungsabläufe der ersten und der zweiten Fokuseinstelleinrichtung können dabei miteinander gekoppelt oder unabhängig voneinander erfolgen.

Alternativ kann die zweite Fokuseinstelleinrichtung derart ausgelegt sein, dass sie den Krümmungsradius des zweiten optischen Elements und somit seine Abbildungseigenschaften verändern kann, um die Fokuslage einzustellen. Das zweite optische Element ist dabei vorzugsweise als adaptive Linse ausgebildet, die mit der zweiten Fokuseinstelleinrichtung zur Veränderung der Abbildungseigenschaften z.B. durch Einstellung eines auf die adaptive Linse ausgeübten Drucks zur Veränderung von deren Krümmungsradius zusammenwirkt.

Sowohl die erste als auch die zweite Fokuseinstelleinrichtung sind dabei zur Einstellung des Fokusdurchmessers und/oder der Fokuslage bevorzugt durch eine Steuereinheit in Abhängigkeit von applikationsspezifischen Vorgabe- als auch von aktuellen Korrekturwerten, die insbesondere auf Messdaten einer Prozessüberwachung basieren, ansteuerbar. Unter applikationsspezifischen Vorgabewerten sind in diesem Zusammenhang einzustellende Strahleigenschaften für eine bestimmte Bearbeitungsaufgabe zu verstehen, die ggf. auch die aus diesen Einstellungen resultierenden Wechselwirkungen zwischen Fokusdurchmesser und Fokuslage bei der Veränderung zumindest einer dieser Größen berücksichtigen bzw. kompensieren. Im Gegensatz hierzu ergeben sich aktuelle Korrekturwerte während des Prozesses, beispielsweise durch thermisch induzierte Veränderungen der Abbildungseigenschaften der einzelnen Komponenten der Strahlformungseinheit oder aber auf durch Abstandsänderungen zwischen Strahlformungseinheit und Werkstück, die ggf. aufgrund von an dem Werkstück gebildeten Konturen kompensiert werden müssen. Eine entsprechende Steuerungseinheit kann dabei sowohl Bestandteil der Strahlformungseinheit als auch peripherer Komponenten sein, beispielsweise Teil einer Laserbearbeitungsanlage, welche die Strahlformungseinheit enthält.

In einer bevorzugten Ausführungsform weist die Strahlformungseinheit ein Gehäuse auf, welches durch das erste optische Element und das zweite optischen Element sowie durch deren Halterungen in Kammern aufgeteilt ist, wobei Überströmkanäle zum Gas- und Druckaustausch zwischen den Kammern vorgesehen sind. Dies berücksichtigt den Umstand, dass im Bereich der Strahlformungseinheit bis zur Fokussieroptik möglichst Reinraumbedingungen vorliegen sollten. Eine Bewegung der ersten und/oder zweiten optischen Elemente bedingt jedoch veränderte Volumen in den durch diese Elemente begrenzten Kammern und würde ohne Überströmkanäle in entsprechende Unter- oder Überdrucksituationen resultieren.

Vorteilhafterweise wird die Strahlformungseinheit in den Bearbeitungskopf einer Laserbearbeitungsmaschine, insbesondere einer Laserschneidanlage, integriert bzw. bildet zumindest einen Bestandteil dieses Bearbeitungskopfes. Zwischen der Fokussieroptik und dem zu bearbeitenden Werkstück kann eine weitere, der Fokussieroptik in Strahlausbreitungsrichtung nachgeordnete Optik, insbesondere ein Schutzglas (Planfenster) zur Abdichtung der Strahlformungseinheit gegen Gasdruck vorgesehen sein. Das Schutzglas in Form eines planparallelen (Glas-)Fensters wird in der Strahlformungseinheit oder dem Bearbeitungskopf gehalten. Hierdurch ist die Strahlformungseinheit zum einen gegen Gasdruck abgedichtet, wobei aber auch gerade ein Austausch oder eine Reinigung der der Bearbeitungsstelle zugewandten letzten Optik, in diesem Falle des Schutzglases, ohne Nachzentrierung des Laserstrahls erfolgen kann.

In einer bevorzugten Weiterbildung der Erfindung ist zwischen der Fokussieroptik und der weiteren Optik eine Trennstelle eines Kollisionsschutzes vorgesehen, wobei der Bereich der Trennstelle von einem elastischen Balg überdeckt ist. Der Kollisionsschutz ermöglicht eine Trennung zwischen dem Halter des Schutzglases und der Fokussieroptik bei Überlast. Der Bereich, in dem die Trennung vorgenommen wird, ist dabei von einem elastischen Balg, beispielsweise in Form eines Faltenbalgs, umgeben, so dass bei der Trennung keine Partikel in den Bereich zwischen Schutzglas und Fokussieroptik eindringen und sich insbesondere auf der Fokussieroptik absetzen können.

Die erfindungsgemäße Strahlformungseinheit kann dabei bevorzugt bei Laserbearbeitungsmaschinen zum Einsatz kommen, deren Laserstrahlquelle ein Festkörperlaser, d.h. ein Laser mit einer Lasergrundwellenlänge im Nah-Infrarot-Bereich von ca. 1 µm ist. Die Zuführung der Laserstrahlung von der Laserstrahlquelle zur Strahlformungseinheit bzw. zum Bearbeitungskopf erfolgt in einem solchen Aufbau bevorzugt über eine Transportfaser. Das erste optische Element der Strahlformungseinheit befindet sich dabei in Strahlausbreitungsrichtung im Anschluss an die Transportfaser, so dass der Laserstrahl divergent auf das erste optische Element auftrifft.

Die Erfindung betrifft in einem weiteren Aspekt ein Verfahren zur Ansteuerung der oben beschriebenen Strahlformungseinheit, bei dem die Fokuseinstelleinrichtungen in Abhängigkeit von applikationsspezifischen Vorgabewerten angesteuert und bei der Ansteuerung der Fokuseinstelleinrichtungen aktuelle Korrekturwerte berücksichtigt werden.

Hierzu ist eine Steuerungseinheit vorgesehen, die der ersten und der zweiten Fokuseinstellvorrichtung Steuersignale vorgibt, über die das erste und/oder zweite optische Element derart eingestellt werden, dass sich die gewünschte Strahleigenschaft über die Fokussierung im Bearbeitungspunkt ergibt. Hierzu greift die Steuerung sowohl auf applikationsspezifische Vorgabe- als auch aktuelle Korrekturwerte zurück. Wie bereits weiter oben ausgeführt, beziehen sich die applikationsspezifischen Vorgabewerte auf einzustellende Strahleigenschaften für eine bestimmte Bearbeitungsaufgabe, ggf. auch unter Berücksichtigung der aus diesen Einstellungen resultierenden Wechselwirkungen zwischen Fokusdurchmesser und Fokuslage bei der Veränderung zumindest einer dieser Größen. Für die Kompensation der angeführten Wechselwirkungen kann die Steuerungseinheit beispielsweise auf hinterlegte Kennfelder oder funktionale Zusammenhänge zugreifen. Zudem kann vorgesehen werden, dass eine Kompensation erst bei Überschreitung definierter Grenzwerte vorgenommen wird. Die zusätzlich zu berücksichtigenden aktuellen Korrekturwerte ergeben sich aus Messdaten einer ggf. vorzusehenden Prozessüberwachung oder ebenfalls aus Kennlinienfeldern, die z.B. von der Strahlungsleistung und der Bestrahlungsdauer abhängig sind.

In einer bevorzugten Variante des Verfahrens werden die aktuellen Korrekturwerte zur Kompensation thermisch induzierter Abbildungsfehler der Strahlformungseinheit herangezogen, die insbesondere mit zunehmender Bestrahlungszeit der optischen Komponenten und/oder deren Verschmutzung auftreten und die vornehmlich eine ungewollte Veränderung der Fokuslage betreffen. Bei der Ermittlung der Korrekturwerte und entsprechenden Steuersignalen zur Ansteuerung der Fokuseinstelleinrichtungen fließen ebenfalls die bekannten Wechselwirkungen zwischen Fokusdurchmesser und Fokuslage bei der Veränderung zumindest einer dieser Größen ein.

Vorzugsweise werden die aktuellen Korrekturwerte basierend auf der Bestrahlungsdauer und der Laserleistung ermittelt, die zumindest einer optischen Komponente der Strahlformungseinheit zugeführt wird. Die thermisch induzierten Abbildungsfehler sind in diesem Fall in Abhängigkeit von Laserleistung und Bestrahlungsdauer beispielsweise in der Steuereinheit hinterlegt.

Alternativ hierzu kann auch zur Ermittlung der aktuellen Korrekturwerte an zumindest einer der optischen Komponenten der Strahlformungseinheit eine Temperaturmessung erfolgen, wobei die aktuell ermittelte Temperatur mit einem entsprechend thermisch induzierten Abbildungsfehler korreliert werden kann. Besonders bevorzugt wird dabei die Temperatur im Zentrum der zumindest einen optischen Komponente ermittelt. Die Messung erfolgt dabei über dem Fachmann bekannte, ggf. berührungslose Messmittel (Wärmesensoren).

In einer im Rahmen der Temperaturmessung besonders bevorzugten Variante wird lediglich die Temperatur der in Ausbreitungsrichtung der Laserstrahlung letzten optischen Komponente ermittelt, d.h. die Temperatur der Fokussieroptik oder des Schutzglases. Der ermittelte Korrekturwert berücksichtigt in diesem Fall nicht nur die Fokuslagenverschiebung infolge der Laserleistung und Bestrahlungsdauer hinsichtlich der Absorption des Schutzglases als solches, sondern mittels der Temperaturmessung auch eine durch prozessbedingte Verschmutzung erhöhte Absorption des Schutzglases. Eine solche Schutzglasüberwachung, die über die Temperaturmessung den Verschmutzungsgrad ermittelt, kann ggf. auch bei Erreichen eines zuvor definierten Grenzwertes ein Abschalten des Prozesses gewährleisten. Über eine weitere Signalverwertung (s.o.) kann der Temperaturmesswert zur Fokuslagenregelung herangezogen werden.

Der aktuelle Korrekturwert bezieht sich bei thermisch induzierten Abbildungsfehlern vornehmlich auf die Fokuslage, so dass das zur Kompensation verwendete Steuerungssignal in der Regel nur an die zweite Fokuseinstelleinrichtung übermittelt werden muss.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a-c: eine schematische Darstellung einer Ausführungsform der Strahlformungseinheit bei drei unterschiedlichen Einstellungen des Fokusdurchmessers bzw. der Fokuslage, und
- Fig. 2: die Strahlformungseinheit von Fign. 1a-c in einer in ein Gehäuse integrierten Bauform.

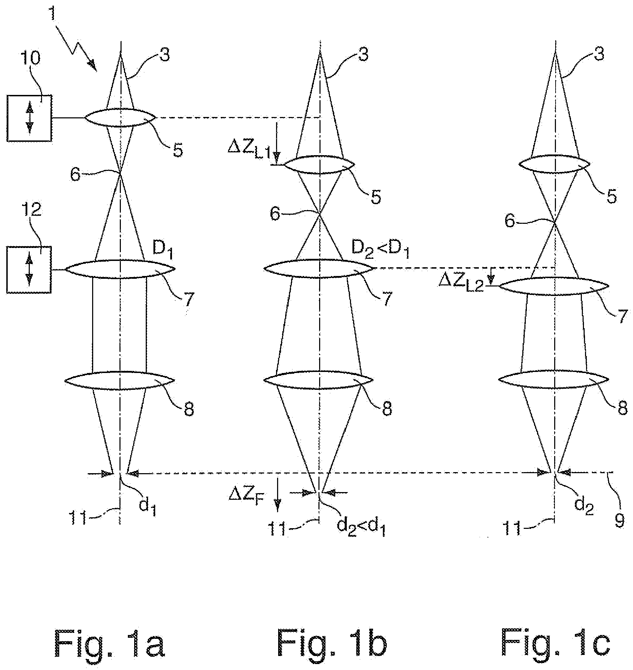

In Fig. 1a ist eine Strahlformungseinheit 1 gezeigt, bei der ein Laserstrahl 3 divergent auf eine erste Linse 5 mit kurzer Brennweite (typischer Weise kleiner als ca. 50 mm, insbesondere im Bereich um ca. 30 mm) trifft und über einen Zwischenfokus 6 auf eine zweite Linse 7 (mit Strahldurchmesser D1) abgebildet wird. Der durch die zweite Linse 7 kollimierte Laserstrahl 3 wird über eine (ortsfeste) weitere Linse, die als Fokussieroptik 8 dient, auf eine Werkstückoberfläche 9 zur Lasermaterialbearbeitung fokussiert. Der am Arbeitspunkt auf der Werkstückoberfläche 9 gebildete Laserfokus weist hierbei einen Durchmesser d1 auf.

Bei einem Wechsel der Applikation, beispielsweise beim Umstellen auf eine andere Blechdicke oder ein anderes Material von zu schneidenden Werkstücken (Blechen), kann es erforderlich sein, den Fokusdurchmesser d1 auf der Werkstückoberfläche 9 zu verändern und beispielsweise einen kleineren Fokusdurchmesser d2 (< d1) zu wählen.

Zur variablen Einstellung des Fokusdurchmessers ist an der Strahlformungseinheit 1 eine erste Fokuseinstelleinrichtung 10 vorgesehen, welche mittels eines (nicht gezeigten) Antriebs, beispielsweise eines Linearmotors, die erste Linse 5 entlang der optischen Achse 11 des Laserstrahls 3 bewegen kann.

Wie in **Fig. 1b** gezeigt ist, kann bei einer Verschiebung Δz_{L1} der ersten Linse 5 in Strahlausbreitungsrichtung des Laserstrahls 3 entlang der optischen Achse 11 der Strahldurchmesser des auf die zweite Linse 7 auftreffenden Laserstrahls 3 verringert werden (D2 < D1). Die Verschiebung Δz_{L1} der ersten Linse 5 wird hierbei so gewählt, dass die Reduzierung des Strahldurchmessers an der zweiten Linse 7 (von D1 auf D2) die gewünschte Verringerung des Fokusdurchmessers (von d1 auf d2) ergibt. Wie in Fig. 1b ebenfalls zu erkennen ist, führt die Verschiebung der ersten Linse 5 zu einer Fokuslagenverschiebung Δz_{F} in Strahlausbreitungsrichtung des Laserstrahls 3. Um die Fokuslagenverschiebung Δz_{F} zu kompensieren und den Laserfokus wieder an der Werkstückoberseite 9 zu positionieren, wird eine zweite Fokuseinstelleinrichtung 12 verwendet, weiche die zweite Linse 7 in Strahlausbreitungsrichtung entlang der optischen Achse 11 des Laserstrahls 3 um einen Betrag Δz_{L2} verschiebt, der so gewählt ist, dass die werkstückseitige Fokuslage wieder mit der Arbeitsposition an der Werkstückoberseite 9 übereinstimmt, wie in **Fig. 1c** dargestellt ist. Hierbei kann ausgenutzt werden, dass die Veränderung der Position der zweiten Linse 7 zwar zu einer Veränderung der Fokuslage führt, den Fokusdurchmesser d2 aber nicht beeinflusst. Handelt es sich bei der zweiten Linse 7 um eine adaptive Linse (mit einstellbarem Krümmungsradius), so kann alternativ oder zusätzlich zu einer Verschiebung der zweiten Linse 7 eine Kompensation der Fokuslagenverschiebung Δz_{F} auch dadurch erfolgen, dass die zweite Fokuseinstelleinrichtung 12 die Krümmung der zweiten Linse 7 geeignet einstellt.

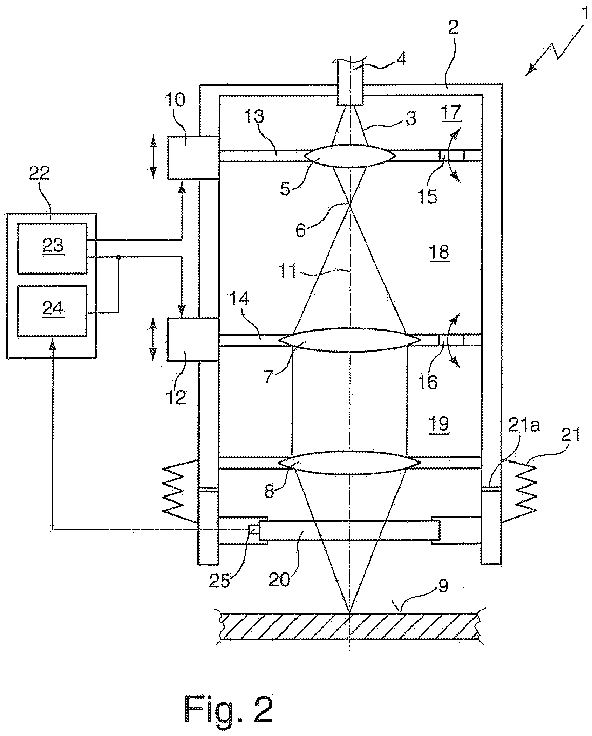

In **Fig. 2** ist die Strahlformungseinheit 1 in einem Einbauzustand in einem Gehäuse 2 gezeigt, in das der Laserstrahl 3 mit einer Lasergrundwellenlänge im Nah-InfrarotBereich von ca. 1 µm über eine Transportfaser 4 eingekoppelt wird. Zusätzlich zu den Fokuseinstelleinrichtungen 10, 12 sind jeweils Linsenhalterungen 13, 14 zur Führung der ersten Linse 5 bzw. der zweiten Linse 7 bei der Verschiebung entlang der optischen Achse 11 des Laserstrahls 3 gezeigt. Die Linsenhalterungen 13, 14 schließen auch bei der Bewegung der Linsen 5, 7 dichtend mit dem Gehäuse 2 ab, so dass die beiden Linsen 5, 7 zusammen mit den Linsenhalterungen 13, 14 drei Kammern 17, 18, 19 begrenzen. Die Linsenhalterungen 13, 14 zur Führung der ersten bzw. zweiten Linse 5, 7 weisen dabei Überströmungskanäle 15, 16 auf, die für einen Druckausgleich zwischen den Kammern 17, 18, 19 beim Bewegen der Linsen 5, 7 sorgen.

In Strahlausbreitungsrichtung der Fokussieroptik 8 nachgeordnet weist die Strahlformungseinheit 1 ein Schutzglas/Druckfenster 20 auf. Ein nicht näher gezeigter Kollisionsschutz sieht dabei vor, dass eine kollisionsbedingte Trennung 21 a in dem Bereich zwischen Fokussieroptik 8 und Schutzglas/Druckfenster 20 erfolgt. Ein um diesen Bereich an dem Gehäuse 2 der Strahlformungseinheit 1 angebrachter Faltenbalg 21 verhindert in einem solchen Fall das Eindringen von Schmutzpartikeln, die sich im ungünstigsten Fall direkt an der Fokussieroptik 8 absetzen könnten.

Die Einstellung der Fokuslage und des Fokusdurchmessers über die Fokuseinstelleinrichtungen 10, 12 erfolgt durch von einer Steuerung 22 vorgegebene Steuersignale. Diese Steuersignale werden in Abhängigkeit von applikationsspezifischen Vorgabewerten 23 als auch aktuellen Korrekturwerten 24 bestimmt. Die durch die Vorgabewerte 23 ermittelten Steuersignale werden sowohl an die erste als auch an die zweite Fokuseinstelleinrichtung 10, 12 weitergeleitet und in entsprechende Bewegungen der ersten bzw. der zweiten Linse 5, 7 umgesetzt. Der in Fig. 2 dargestellte Fall geht hinsichtlich der aktuellen Korrekturwerte von einer Kompensation thermisch induzierter Abbildungsfehler aus, die im Wesentlichen die Fokuslage beeinflussen, so dass ein aufgrund einer Änderung eines aktuellen Korrekturwerts zur Kompensation der Fokuslagenverschiebung verwendetes Steuersignal hier nur an die zweite Fokuseinstelleinrichtung 12 weitergeleitet werden muss.

Es ist möglich, dass eine Kompensation der Fokuslagenverschiebung aufgrund aktueller Korrekturwerte erst bei Überschreitung definierter Grenzwerte vorgenommen wird, um zu verhindern, dass die Linsen 5, 7 auch dann bewegt werden müssen, wenn nur geringe Veränderungen der Fokuslage auftreten. Die zusätzlich zu berücksichtigenden aktuellen Korrekturwerte können sich aus Messdaten einer Prozessüberwachung ergeben, die bei dem in Fig. 2 gezeigten Beispiel von einem Temperatursensor 25 zur Überwachung der Temperatur des Schutzglases 20 gebildet wird. Die aktuell von dem Temperatursensor 25 ermittelte Temperatur wird in der Steuerungseinheit 22 mit einem entsprechend thermisch induzierten Abbildungsfehler korreliert und daraus der aktuelle Korrekturwert 24 zur Korrektur der Fokuslage berechnet.

Alternativ oder zusätzlich kann die Steuerungseinheit 22 für die Bestimmung der aktuellen Korrekturwerte 24 auch auf lastabhängige Kennlinienfelder zurückgreifen, in denen die thermisch induzierten Abbildungsfehler der Strahlformungseinheit 1 bzw. einzelner Komponenten der Strahlformungseinheit 1 in Abhängigkeit von Laserleistung und Bestrahlungsdauer hinterlegt sind. Durch eine Kombination der lastabhängigen Kennlinien mit der Temperaturmessung ist es hierbei möglich, die Verschmutzung des Schutzglases 20 zu bestimmen und deren Auswirkung bei der Bestimmung des aktuellen Korrekturwerts 24 zur Fokuslageregelung zu berücksichtigen.

In einer nicht weiter dargestellten Variante kann der aktuelle Korrekturwert 24 auch als eine Eingangsgröße für die Berechnung des applikationsspezifischen Vorgabewertes 23 dienen.

## Patentansprüche

1. Strahlformungseinheit (1) zur Fokussierung eines divergenten Laserstrahls (3) zur Lasermaterialbearbeitung auf ein Werkstück (9), umfassend:
ein erstes optisches Element (5), auf das der divergente Laserstrahl (3) trifft,
ein zweites optisches Element (7), das dem ersten optischen Element (5) in Strahlausbreitungsrichtung nachgeordnet ist, und
eine dem zweiten optischen Element (7) in Strahlausbreitungsrichtung nachgeordnete Fokussieroptik (8), wobei
dem ersten optischen Element (5) eine erste Fokuseinstelleinrichtung (10) zur Einstellung eines Fokusdurchmessers (D) durch Beeinflussung des ersten optischen Elements (5) zugeordnet ist, und wobei
dem zweiten optischen Element (7) eine zweite Fokuseinstelleinrichtung (12) zur Einstellung einer Fokuslage in Strahlausbreitungsrichtung des Laserstrahls (3) durch Beeinflussung des zweiten optischen Elements (7) zugeordnet ist, **dadurch gekennzeichnet, dass**
der Laserstrahl (3) durch das erste optische Element (5) über einen Zwischenfokus (6) auf das zweite optische Element (7) abgebildet wird.

2. Strahlformungseinheit nach Anspruch 1, **dadurch gekennzeichnet, dass** das erste optische Element durch ein transmissives optisches Element, bevorzugt eine Linse (5), gebildet ist, die bevorzugt eine Brennweite von weniger als 50 mm, besonders bevorzugt eine Brennweite von weniger als 40 mm aufweist.

3. Strahlformungseinheit nach Anspruch 1 oder 2, **dadurch gekennzeichnet, dass** das erste optische Element (5) über die erste Fokuseinstelleinrichtung (10) zur Einstellung des Fokusdurchmessers (D) entlang der optischen Achse (11) des Laserstrahls (3) bewegbar ist.

4. Strahlformungseinheit nach einem der vorhergehenden Ansprüche, **dadurch gekennzeichnet, dass** das zweite optische Element, das bevorzugt durch ein transmissives optisches Element, insbesondere durch eine Linse (7), gebildet ist, über die zweite Fokuseinstelleinrichtung (12) zur Einstellung der Fokuslage entlang der optischen Achse (11) des Laserstrahls (12) bewegbar und/oder über zweite Fokuseinstelleinrichtung (12) in seinen Abbildungseigenschaften veränderbar ist.

5. Strahlformungseinheit nach einem der vorhergehenden Ansprüche, **gekennzeichnet durch** eine Steuereinheit (22) zur Ansteuerung der ersten Fokuseinstelleinrichtung (10) und/oder der zweiten Fokuseinstelleinrichtung (12) in Abhängigkeit von applikationsspezifischen Vorgabewerten (23) und von aktuellen Korrekturwerten (24), die insbesondere auf Messdaten einer Prozessüberwachung (25) basieren.

6. Strahlformungseinheit nach einem der vorhergehenden Ansprüche, weiter umfassend ein Gehäuse (2), welches durch das erste optische Element (13) und das zweite optischen Element (7) sowie durch deren Halterungen (13, 14) in Kammern (17, 18, 19) aufgeteilt ist, wobei Überströmkanäle (15, 16) zum Gas- und Druckaustausch zwischen den Kammern (17, 18, 19) vorgesehen sind.

7. Strahlformungseinheit nach einem der vorhergehenden Ansprüche, **gekennzeichnet durch** eine weitere, der Fokussieroptik (8) in Strahlausbreitungsrichtung nachgeordnete Optik, insbesondere ein Planfenster (20), zur Abdichtung der Strahlformungseinheit (1) gegen Gasdruck.

8. Strahlformungseinheit nach Anspruch 7, **dadurch gekennzeichnet, dass** zwischen der Fokussieroptik (8) und der weiteren Optik (20) eine Trennstelle (21 a) eines Kollisionsschutzes vorgesehen ist, wobei der Bereich der Trennstelle (21 a) von einem elastischen Balg (21) überdeckt ist.

9. Verfahren zum Ansteuern einer Strahlformungseinheit (1) nach einem der vorhergehenden Ansprüche, bei dem den Fokuseinstelleinrichtungen (10, 12) in Abhängigkeit von applikationsspezifischen Vorgabewerten (23) angesteuert werden, wobei bei der Ansteuerung der Fokuseinstelleinrichtungen (10, 12) aktuelle Korrekturwerte (24) berücksichtigt werden.

10. Verfahren nach Anspruch 9, **dadurch gekennzeichnet, dass** die aktuellen Korrekturwerte (24) zur Kompensation thermisch induzierter Abbildungsfehler der Strahlformungseinheit (1) herangezogen werden.

11. Verfahren nach Anspruch 9 oder 10, **dadurch gekennzeichnet, dass** die aktuellen Korrekturwerte (24) basierend auf der Bestrahlungsdauer und der Laserleistung ermittelt werden, die zumindest einer optischen Komponente (20) der Strahlformungseinheit (1) zugeführt wird.

12. Verfahren nach einem der Ansprüche 9 bis 11, **dadurch gekennzeichnet, dass** die aktuellen Korrekturwerte (24) anhand von Temperaturmessungen an mindestens einer optischen Komponente der Strahlformungseinheit (1), insbesondere an einer in Strahlausbreitungsrichtung zuletzt angeordneten optischen Komponente (20), ermittelt werden.

## Claims

1. Beam shaping unit (1) for focusing a divergent laser beam (3) for laser material processing onto a workpiece (9) comprising:
a first optical element (5) which the divergent laser beam (3) strikes, a second optical element (7) which is arranged downstream of the first optical element (5) in the expansion direction of the beam, and
an optical focusing unit (8) which is arranged downstream of the second optical element (7) in the expansion direction of the beam,
a first focal point adjustment device (10) for adjusting a focal point diameter (D) by influencing the first optical element (5) being associated with the first optical element (5), and
a second focal point adjustment device (12) for adjusting a focal position in the beam expansion direction of the laser beam (3) by influencing the second optical element (7) being associated with the second optical element (7),
**characterised in that**
the laser beam (3) is imaged by the first optical element (5) by means of an intermediate focal point (6) onto the second optical element (7).

2. Beam shaping unit according to claim 1, **characterised in that** the first optical element is formed by a transmissive optical element, preferably a lens (5), which preferably has a focal distance of less than 50 mm, in a particularly preferred manner a focal distance of less than 40 mm.

3. Beam shaping unit according to claim 1 or claim 2, **characterised in that** the first optical element (5) can be moved along the optical axis (11) of the laser beam (3) by means of the first focal point adjustment device (10) in order to adjust the focal point diameter (D).

4. Beam shaping unit according to any one of the preceding claims, **characterised in that** the second optical element which is preferably formed by a transmissive optical element, in particular by a lens (7), can be moved by means of the second focal point adjustment device (12) in order to adjust the focal position along the optical axis (11) of the laser beam (12) and/or can be modified in terms of its imaging properties by means of the second focal point adjustment device (12).

5. Beam shaping unit according to any one of the preceding claims, **characterised by** a control unit (22) for controlling the first focal point adjustment device (10) and/or the second focal point adjustment device (12) in accordance with application-specific set values (23) and current correction values (24) which are based in particular on measurement data of a process monitoring system (25).

6. Beam shaping unit according to any one of the preceding claims, further comprising a housing (2) which is divided into chambers (17, 18, 19) by the first optical element (13) and the second optical element (7) and by the mounts (13, 14) thereof, overflow channels (15, 16) being provided for gas and pressure exchange between the chambers (17, 18, 19).

7. Beam shaping unit according to any one of the preceding claims, **characterised by** an additional optical unit which is arranged downstream of the optical focusing unit (8) in the expansion direction of the beam, in particular a planar window (20), for sealing the beam shaping unit (1) against gas pressure.

8. Beam shaping unit according to claim 7, **characterised in that** a separation location (21a) of a collision protection system is provided between the optical focusing unit (8) and the additional optical unit (20), the region of the separation location (21a) being covered by a resilient bellows (21).

9. Method for controlling a beam shaping unit (1) according to any one of the preceding claims, wherein the focal point adjustment devices (10, 12) are controlled in accordance with application-specific set values (23),
wherein,
when the focal point adjustment devices (10, 12) are controlled, current correction values (24) are taken into account.

10. Method according to claim 9, **characterised in that** the current correction values (24) are used to compensate for thermally induced imaging errors of the beam shaping unit (1).

11. Method according to claim 9 or claim 10, **characterised in that** the current correction values (24) are determined based on the irradiation duration and the laser power, which is supplied to at least one optical component (20) of the beam shaping unit (1).

12. Method according to any one of claims 9 to 11, **characterised in that** the current correction values (24) are determined on the basis of temperature measurements at least at one optical component of the beam shaping unit (1), in particular at an optical component (20) which is arranged last in the beam expansion direction.

## Revendications

1. Unité de mise en forme de faisceau (1) pour focaliser un faisceau laser divergent (3) pour l'usinage de matériau par laser sur une pièce (9), comprenant :
un premier élément optique (5), sur lequel le faisceau laser divergent (3) arrive,
un deuxième élément optique (7) qui est placé après le premier élément optique (5) dans la direction de propagation de faisceau, et
une optique de focalisation (8) placée après le deuxième élément optique (7) dans la direction de propagation de faisceau,
un premier dispositif de réglage de foyer (10) pour régler un diamètre de foyer (D) en influençant le premier élément optique (5) étant associé au premier élément optique (5), et
un deuxième dispositif de réglage de foyer (12) pour régler une position focale dans la direction de propagation de faisceau du faisceau laser (3) en influençant le deuxième élément optique (7) étant associé au deuxième élément optique (7),
**caractérisée en ce que**
le faisceau laser (3) est reproduit par le premier élément optique (5) sur le deuxième élément optique (7) par l'intermédiaire d'un foyer intermédiaire (6).

2. Unité de mise en forme de faisceau selon la revendication 1, **caractérisée en ce que** le premier élément optique est formé par un élément optique transmissif, de préférence une lentille (5), qui présente de préférence une distance focale inférieure à 50 mm, particulièrement de préférence une distance focale inférieure à 40 mm.

3. Unité de mise en forme de faisceau selon la revendication 1 ou 2, **caractérisée en ce que** le premier élément optique (5) est déplaçable le long de l'axe optique (11) du faisceau laser (3) par le premier dispositif de réglage de foyer (10) pour régler le diamètre de foyer (D).

4. Unité de mise en forme de faisceau selon l'une des revendications précédentes, **caractérisée en ce que** le deuxième élément optique, qui est de préférence formé par un élément optique transmissif, en particulier par une lentille (7), est déplaçable le long de l'axe optique (11) du faisceau laser (12) par le deuxième dispositif de réglage de foyer (12) pour régler la position focale et/ou modifiable en ce qui concerne ses propriétés de reproduction par le deuxième dispositif de réglage de foyer (12).

5. Unité de mise en forme de faisceau selon l'une des revendications précédentes, **caractérisée par** une unité de commande (22) pour commander le premier dispositif de réglage de foyer (10) et/ou le deuxième dispositif de réglage de foyer (12) en fonction de valeurs de consigne (23) spécifiques à l'application et de valeurs de correction actuelles (24) qui sont basées en particulier sur les données de mesure d'une surveillance de processus (25).

6. Unité de mise en forme de faisceau selon l'une des revendications précédentes, comprenant en outre un boîtier (2) qui est divisé en chambres (17, 18, 19) par le premier élément optique (13) et le deuxième élément optique (7) ainsi que par leurs supports (13, 14), des canaux de trop-plein (15, 16) étant prévus pour l'échange de gaz et de pression entre les chambres (17, 18, 19).

7. Unité de mise en forme de faisceau selon l'une des revendications précédentes, **caractérisée par** une autre optique, placée après l'optique de focalisation (8) dans la direction de propagation de faisceau, en particulier une fenêtre plane (20), pour rendre l'unité de mise en forme de faisceau (1) étanche à la pression de gaz.

8. Unité de mise en forme de faisceau selon la revendication 7, **caractérisée en ce qu'**un point de rupture (21a) d'une protection anti-collision est prévu entre l'optique de focalisation (8) et l'autre optique (20), la zone du point de rupture (21 a) étant recouverte par un soufflet élastique (21).

9. Procédé de commande d'une unité de mise en forme de faisceau (1) selon l'une des revendications précédentes, selon lequel les dispositifs de réglage de foyer (10, 12) sont commandés en fonction de valeurs de consigne (23) spécifiques à l'application, des valeurs de correction actuelles (24) étant prises en compte lors de la commande des dispositifs de réglage de foyer (10, 12).

10. Procédé selon la revendication 9, **caractérisé en ce que** les valeurs de correction actuelles (24) sont utilisées pour compenser des défauts de reproduction induits thermiquement de l'unité de mise en forme de faisceau (1).

11. Procédé selon la revendication 9 ou 10, **caractérisé en ce que** les valeurs de correction actuelles (24) sont déterminées sur la base de la durée d'irradiation et de la puissance du laser qui est amenée à au moins un composant optique (20) de l'unité de mise en forme de faisceau (1).

12. Procédé selon l'une des revendications 9 à 11, **caractérisé en ce que** les valeurs de correction actuelles (24) sont déterminées à l'aide de mesures de température sur au moins un composant optique de l'unité de mise en forme de faisceau (1), en particulier sur un composant optique (20) disposé en dernier dans la direction de propagation de faisceau.
